# EUROPÄISCHE PATENTSCHRIFT

(11) **EP 3 433 217 B1**
(45) Veröffentlichungstag und Bekanntmachung des Hinweises auf die Patenterteilung: **20.07.2022**
(21) Anmeldenummer: 17710997.2
(22) Anmeldetag: 21.03.2017
(51) Int. Cl.: C04B 28/02, C04B 40/00, C04B 103/14

(54) **BESCHLEUNIGER**
ACCELERATOR
ACCELERATEUR

(30) Priorität: 22.03.2016 EP 16161766
(43) Veröffentlichungstag der Anmeldung: 30.01.2019
(73) Patentinhaber: Sika Technology AG, 6340 Baar (CH)
(72) Erfinder: BÜRGE, Christian, 5503 Schafisheim (CH); MÄDER, Gilbert, 8460 Marthalen (CH); WOMBACHER, Franz, 8916 Jonen (CH)
(74) Vertreter: Sika Patent Attorneys
(86) Internationale Anmeldenummer: PCT/EP2017/056744
(87) Internationale Veröffentlichungsnummer: WO 2017/162699

(56) Entgegenhaltungen:
- EP-A1- 0 465 991
- EP-A1- 2 128 110
- WO-A1-2015/078985
- WO-A1-2015/177232

## Beschreibung

### Technisches Gebiet

Die Erfindung betrifft Erhärtungsbeschleuniger für mineralische Bindemittel, entsprechende Zusammensetzungen enthalten mineralische Bindemittel und daraus hergestellte Formkörper. Des Weiteren bezieht sich die Erfindung auf Verwendungen und Verfahren zur Beschleunigung des Erhärtens einer mineralischen Bindemittel und zur Herstellung einer Zusammensetzung umfassend mindestens ein mineralisches Bindemittel. Weiter betrifft die Erfindung die Verwendungen von ausgewählten Substanzen zur Verminderung des Einflusses von Magnesiumcarbonat auf beschleunigende Zusatzmittel und zur Verbesserung der Wirkung eines beschleunigenden Zusatzmittels in mineralischen Bindemittelzusammensetzungen enthaltend Magnesiumcarbonat.

### Stand der Technik

Die Herstellung von Zement generiert eine beträchtliche Menge an klimarelevantem CO₂. Um die CO₂-Emissonen zu reduzieren, kann Zement in Bindemittelzusammensetzungen teilweise durch latent-hydraulische und/oder puzzolanische Zementzusatzstoffe wie z.B. Flugaschen, Schlacken oder Silicastaub ersetzt werden. Derartige Zusatzstoffe entstehen als Nebenprodukte in verschiedenen Industrieprozessen und sind daher in Bezug auf die CO₂-Bilanz vorteilhaft. Jedoch benötigt das Abbinden solcher Zementzusatzstoffe ohne zusätzliche Massnahmen deutlich länger als bei hydraulischem Zement. Dies ist insbesondere im Hinblick auf hohe Frühfestigkeiten von Bindemittelzusammensetzungen nachteilig. Es ist daher erforderlich, das Abbinden und Erhärten von Bindemittelzusammensetzungen enthaltend latent-hydraulische und/oder puzzolanische Zusatzstoffe zu beschleunigen.

Eine ähnliche Problematik ergibt sich bei der Herstellung von Beton- oder Stahlbetonfertigteilen sowie bei Fahrbahn- oder Pistensanierungen. Dabei wird üblicherweise eine hohe Frühfestigkeit gefordert, damit die Fertigteile bereits nach wenigen Stunden aus den Schalungen herausgenommen, transportiert, gestapelt oder vorgespannt bzw. die Fahrbahnen oder Pisten befahren oder belastet werden können. Darum ist auch bei derartigen Anwendungen eine Beschleunigung des Erhärtungsvorgangs erwünscht oder notwendig.

Um diese Zielsetzung in der Praxis zu erreichen, werden neben leistungsfähigen Betonrezepturen, mit z.B. niedrigen w/z-Werten oder hohen Zementgehalten, spezielle Substanzen eingesetzt, welche das Erhärten von mineralischen Bindemitteln, insbesondere zementösen Bindemitteln, beschleunigen. Gebräuchlich sind beispielsweise Erhärtungsbeschleuniger basierend auf Aminoalkoholen, Halogeniden, Pseudohalogeniden, Nitriten, Nitraten, Aluminiumsalzen, Glykolen, Glyzerin oder α-Hydroxycarbonsäuren.

Viele der heute bekannten Erhärtungsbeschleuniger, beziehen sich auf Spritzbeton. Diese Beschleuniger haben den Effekt, dass die Zement- oder Betonmischungen nach Zugabe des Beschleunigers sehr schnell abbinden, was bei Spritzbetonanwendungen meist auch erwünscht ist. Wenn die mineralischen Bindemittelzusammensetzungen nach dem Anmachen aber noch weiter verarbeitet werden müssen, sind solche bekannten Beschleunigersysteme daher kaum geeignet.

Die WO 2003/000617 A1 (Sika AG) beschreibt z.B. einen Erhärtungsbeschleuniger für mineralische Bindemittelzusammensetzungen basierend auf einem Alkanolamin, einem anorganischen Nitrat, einer Carbonsäure und einem Polyol.

Ebenfalls bekannt sind Beschleuniger, wie sie in der EP 2 128 110 A1 (Sika Technology AG) beschrieben sind. Derartige Systeme basieren auf Ester von mehrwertigen Alkoholen, die eine hohe Frühfestigkeit ermöglichen, ohne die Verarbeitungszeit oder die Endfestigkeit allzu negativ zu beeinflussen. Bekannte Beschleuniger sind zwar meist durchaus wirksam, haben jedoch häufig den Nachteil, dass sie teuer sind, ein beschränktes Einsatzgebiet aufweisen und teilweise einen stark negativen Einfluss auf die Verarbeitungszeit und die Endfestigkeiten von Mörtel und Beton haben. Zudem hat sich gezeigt, dass die Wirkung von Beschleunigern, wie sie beispielsweise in der EP 2 128 110 A1 beschrieben sind, von der Qualität der Aggregate in der Bindemittelzusammensetzung abhängen können. WO2015/177232 offenbart eine Beschleunigermischung umfassend Glycerinphosphate in Kombination mit feinem Kalk.

Es besteht deshalb weiterhin das Bedürfnis, nach neuen und verbesserten Lösungen, welche die vorstehend genannten Nachteile möglichst überwinden.

### Darstellung der Erfindung

Aufgabe der vorliegenden Erfindung ist es daher, einen verbesserten Erhärtungsbeschleuniger für mineralische Bindemittel zu schaffen. Der erfindungsgemässe Erhärtungsbeschleuniger soll gegenüber bekannten Erhärtungsbeschleunigern insbesondere höhere Frühdruckfestigkeiten von Mörtel und/oder Betonzusammensetzungen ermöglich. Zudem soll der Erhärtungsbeschleuniger die Verarbeitbarkeit von angemachten mineralischen Bindemittelzusammensetzungen möglichst wenig beeinträchtigen. Ebenfalls wünschenswert ist ein Erhärtungsbeschleuniger, welcher möglichst unabhängig von der Qualität der Aggregate in der Bindemittelzusammensetzung wirkt. Zudem sollen entsprechende Verfahren und Verwendungen bereitgestellt werden, welche das Erreichen dieser Ziele möglichst effektiv ermöglichen.

Überraschenderweise wurde gefunden, dass die erfindungsgemässe Aufgabe Im Hinblick auf den Erhärtungsbeschleuniger durch einen Beschleuniger gemäss Anspruch 1 gelöst werden kann.

Demnach beinhaltet der erfindungsgemässe Erhärtungsbeschleuniger mindestens einen Phosphorsäureester eines mehrwertigen Alkohols und mindestens ein Alkalimetallcarbonat.

Wie sich gezeigt hat, kann durch die erfindungsgemässe Kombination des mindestens einen Phosphorsäureesters eines mehrwertigen Alkohols und des mindestens einen Alkalimetallcarbonats die Druckfestigkeit von mineralischen Bindemittelzusammensetzungen, insbesondere 4 - 8 Stunden nach dem Anmachen, signifikant erhöht werden. Die erfindungsgemäss verwendeten Substanzen können dabei funktional zusammenwirken, derart dass eine stärker beschleunigende Wirkung erreicht wird als mir den Einzelsubstanzen alleine. Zudem sind die erfindungsgemässen Erhärtungsbeschleuniger in Bezug auf das Kosten/Leistungsverhältnis äusserst interessant. Weiter wurde gefunden, dass die erfindungsgemässen Erhärtungsbeschleuniger bezüglich unerwünschtem Ansteifverhalten von mineralischen Bindemitteln oder mineralischen Bindemittelzusammensetzungen, insbesondere zementösen Systemen, deutlich weniger problematisch sind als bekannte Beschleuniger.

Im Vergleich zu nicht beschleunigten mineralischen Bindemittelzusammensetzungen erlauben die erfindungsgemässen Beschleuniger in der Praxis beispielsweise ein deutlich früheres Ausschalen oder Belasten von hergestellten Fertigteilen. Gleichzeitig aber bleibt die Verarbeitbarkeit der erfindungsgemäss beschleunigten Zusammensetzungen dennoch über einen verhältnismässig langen Zeitraum auf einem für die Praxis geeigneten Niveau erhalten.

Des Weiteren wurde gefunden, dass die erfindungsgemässen Erhärtungsbeschleuniger in weiten Bereichen unabhängig von der Qualität der eingesetzten Aggregate wirksam sind. Insbesondere hat sich gezeigt, dass auch das Vorhandensein von Magnesiumcarbonat, welches z.B. in Kalksteinfüllern oder Sanden als Nebenbestandteil mit einem Anteil von bis zu einigen Gewichtsprozent vorkommen kann, die Wirkung der Erhärtungsbeschleuniger wenig bis gar nicht beeinträchtigt.

Zudem kann bei den erfindungsgemässen Erhärtungsbeschleunigern bei Bedarf auf möglicherweise problematische Substanzen wie Chloride, Nitrate, Nitrite und Thiocyanate verzichtet werden. Dies ohne signifikante Einbussen in Bezug auf die Beschleunigungswirkung in Kauf zu nehmen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

In einem ersten Aspekt betrifft die Erfindung einen Erhärtungsbeschleuniger für mineralische Bindemittel oder mineralische Bindemittelzusammensetzungen, insbesondere zementöse Bindemittelzusammensetzungen, umfassend mindestens einen Phosphorsäureester eines mehrwertigen Alkohols und mindestens ein Alkalimetallcarbonat.

Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weiss kalk) sein. Eine "mineralische Bindemittelzusammensetzung" ist entsprechend eine Zusammensetzung enthaltend mindestens ein mineralisches Bindemittel.

Unter einem "zementösen Bindemittel" oder einer "zementösen Bindemittelzusammensetzung" wird vorliegend insbesondere ein Bindemittel oder eine Bindemittelzusammensetzung mit einem Anteil von wenigstens 5 Gew.-%, insbesondere wenigstens 20 Gew.-%, bevorzugt wenigstens 35 Gew.-%, im Speziellen wenigstens 65 Gew.-%, Zementklinker verstanden. Der Zementklinker ist bevorzugt ein Portlandzementklinker. Mit Zementklinker ist im vorliegenden Zusammenhang insbesondere gemahlener Zementklinker gemeint.

Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von ≥ 35 Gew.-%, Insbesondere ist der Zement vom Typ CEM I, II oder III, bevorzugt Zement vom Typ CEM I (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel wenigstens 95 Gew.-% aus hydraulischem Bindemittel, insbesondere aus Zementklinker.

Es kann aber auch vorteilhaft sein, wenn die Bindemittelzusammensetzung zusätzlich oder anstelle eines hydraulischen Bindemittels andere Bindemittel enthält. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe wie z.B. Kalksteinmehl, Quarzmehl und/oder Pigmente enthalten. In einer vorteilhaften Ausführungsform enthält das mineralische Bindemittel 5 - 95 Gew.-%, insbesondere 5 - 65 Gew.-%, im Speziellen 15 - 35 Gew.-%, latent-hydraulische und/oder puzzolanische Bindemittel.

Im Besonderen enthält die mineralische Bindemittelzusammensetzung, jeweils bezogen auf den Bindemittelgehalt, 0.001 - 3 Gew.-%, insbesondere 0.01 - 1 Gew.-%, speziell 0.1 - 0.5 Gew.-%, Magnesiumcarbonat.

Der Begriff "Erhärtungsbeschleuniger" steht insbesondere für eine Substanz, welche, falls einem mineralischen Bindemittel zugesetzt und verglichen mit einer Nullprobe ohne zugesetzte Substanz bzw. ohne Erhärtungsbeschleuniger, zu einer Erhöhung der Druckfestigkeit des mineralischen Bindemittels nach einem definierten Zeitpunkt nach dem Anmachen führt. Dies insbesondere nach 4 - 8 Stunden, im Besonderen nach 6 - 8 Stunden. Die Bestimmung der Druckfestigkeiten erfolgt insbesondere nach Norm EN 12390-3.

Unter dem Begriff "mehrwertiger Alkohol" wird eine hydroxyfunktionelle Verbindung mit mehr als einer Hydroxylgruppe verstanden, beispielsweise mit zwei, drei, vier oder fünf Hydroxylgruppen. Besonders bevorzugt ist ein Alkohol mit drei Hydroxylgruppen, das heisst ein dreiwertiger Alkohol. Als Alkohole geeignet sind beispielsweise mehrwertige Alkylalkohole wie Propandiol, Butandiol, Glycerin, Diglycerin, Polyglycerin, Trimethylolethan, Trimethylolpropan, 1,3,5-Pentantriol, Erythrit, Pentaerythrit, Dipentanerythrit, Sorbit, Sorbitan, Glucose, Fructose, Sorbose oder Isosorbid. Besonders bevorzugt ist Glycerin.

Der obengenannte Phosphorsäureester eines mehrwertigen Alkohols wird durch Veresterung aus einem mehrwertigen Alkohol mit Phosphorsäure und/ oder einem Salz von Phosphorsäure erhalten. Vorzugsweise ist der Ester ein Partialester oder partieller Ester eines mehrwertigen Alkohols, vorzugsweise eines dreiwertigen Alkohols. Unter dem Begriff "Partialester oder partieller Ester eines mehrwertigen Alkohols" versteht man, dass der mehrwertige Alkohol neben einer oder mehreren Esterbindungen noch eine oder mehrere freie Hydroxylgruppen aufweist. Der Ester kann ein Mono-, Di- oder Triester sein. Bevorzugt ist ein Monoester, vorzugsweise ein Monoester eines zwei- oder dreiwertigen Alkohols, besonders bevorzugt eines dreiwertigen Alkohols, insbesondere bevorzugt von Glycerin.

Die Phosphorsäure zur Herstellung des Esters kann als freie Säure oder auch als Salz oder Teilsalz vorliegen, wobei der Term "Salz" hier und im Folgenden das Produkt einer Neutralisationsreaktion der Phosphorsäure mit einer Base, und der sich nach Trocknung bildenden Phosphate bezieht. "Teilsalz" bedeutet, dass nicht alle Säurefunktionen der Phosphorsäure neutralisiert worden sind.

Vorzugsweise werden die allfälligen übrigen freien Säuregruppen des Phosphorsäureesters ganz oder teilweise neutralisiert, sodass ein Metallsalz, insbesondere ein Alkali- und/oder Erdalkalisalz, vorliegt. Insbesondere handelt es sich um ein Salz eines ein- oder mehrwertigen Kations, vorzugsweise um ein Natrium-, Kalium-, Calcium-, Magnesium-, Zink- und/oder Aluminiumsalz, besonders bevorzugt um ein Natrium- und/oder Aluminiumsalz. In basischem, wässrigem Milieu können die freien Säuregruppen selbstverständlich auch deprotoniert in anionischer Form vorliegen.

Geeignete Phosphorsäureester für den erfindungsgemässen Erhärtungsbeschleuniger sind beispielsweise Glycerinphosphate. Bevorzugt ist Glycerinmonophosphat, besonders bevorzugt ist Glycerin-2-phosphat, Glycerin-3-phosphat und/oder Hydrate davon.

Mit dem Begriff "Carbonat" sind vorliegend Salze und/oder Ester der Kohlensäure (H₂CO₃) gemeint. Insbesondere handelt es sich um Salze. Von der zweiprotonigen (zweibasigen) Kohlensäure leiten sich dabei zwei Reihen von Salzen ab: (i) die Hydrogencarbonate, die auch primäre Carbonate genannt werden (MHCO₃; basierend auf dem Hydrogencarbonat-Anion HCO₃⁻) und (ii) die sekundären Carbonate (M₂CO₃; basierend auf dem Carbonat-Anion CO₃²⁻). "M" steht dabei für ein Metallion oder eine Mischung aus unterschiedlichen Metallionen, vorliegend ein Alkalimetallion oder eine Mischung aus unterschiedlichen Alkalimetallionen.

Im vorliegenden Zusammenhang haben sich sekundäre Carbonate (M₂CO₃) als bevorzugt herausgestellt. Entsprechend ist das Alkalimetallcarbonat bevorzugt ein sekundäres Carbonat oder eine Verbindung der Formel M₂CO₃.

Insbesondere umfasst das Alkalimetall des mindestens einen Alkalimetallcarbonats Natrium und/oder Kalium. Im Besonderen beinhaltet das mindestens eine Alkalimetallcarbonat Natriumcarbonat (Na₂CO₃) und/oder Kaliumcarbonat (K₂CO₃). Ganz besonders bevorzugt ist Natriumcarbonat (Na₂CO₃).

Gemäss einer vorteilhaften Ausführungsform umfasst der mindestens eine Phosphorsäureester Glycerinphosphat, Dinatriumglycerinphosphat und/oder ein Hydrat davon und das mindestens eine Alkalimetallcarbonat umfasst Natriumcarbonat (Na₂CO₃) und/oder Kaliumcarbonat (K₂CO₃). Ganz besonders bevorzugt handelt es sich dabei um Natriumcarbonat (Na₂CO₃). Derartige Beschleuniger haben sich als besonders effektiv erwiesen ohne dabei die Verarbeitbarkeit von mineralischen Bindemittelzusammensetzungen wesentlich zu beeinträchtigen.

Bevorzugt liegt beim erfindungsgemässen Erhärtungsbeschleuniger oder bei der Verwendung desselben ein Gewichtsverhältnis des mindestens einen Phosphorsäureesters eines mehrwertigen Alkohols zum mindestens einen Alkalimetallcarbonat im Bereich von 1:1 - 10:1, bevorzugt 1.5:1 - 5:1, insbesondere 2:1 - 3:1. Damit werden besonders starke Erhärtungsbeschleunigungen erzielt, insbesondere nach 4 - 8 Tagen, und zugleich kann die Verarbeitbarkeit der Bindemittelzusammensetzungen in einem für die Praxis relevanten Bereich aufrechterhalten werden.

Weiter hat es sich als vorteilhaft herausgestellt, wenn der Erhärtungsbeschleuniger zusätzlich mindestens eine Calciumverbindung beinhaltet. Die Calciumverbindung ist vorzugsweise ein anorganisches Calciumsalz, ein organisches Calciumsalz und/oder ein Gemisch von anorganischen und organischen Calciumsalzen.

Beispielsweise handelt es sich um ein Calciumsalz basierend auf den Anionen Oxid, Hydroxid, Sulfat, Sulfid, Carbonat, Hydrogencarbonat, Chlorid, Fluorid, Bromid, lodid, Carbid, Nitrat, Nitrit, Bromat, Iodat, Phosphat, Phosphit, Lactat, Acetat, Gluconat, Stearat, Citrat, Propionat, Gemische davon und/oder Hydrate von diesen Salzen. Besonders bevorzugt sind Calciumoxid, Calciumhydroxid, und/oder Hydrate davon. Insbesondere beinhaltet die Calciumverbindung Calciumoxid.

Ganz besonders bevorzugt sind Calciumverbindungen, die als Festkörper, beispielsweise als Pulver, eine hohe spezifische Oberfläche aufweisen. Dies bedeutet im vorliegenden Fall eine bevorzugte spezifische Oberfläche, gemessen nach dem BET-Verfahren (N₂ Adsorption, gemessen nach DIN ISO 9277), von zwischen 1 und 50 m²/g Calciumverbindung, bevorzugt zwischen 1.5 und 30 m²/g, insbesondere zwischen 1.9 und 10 m²/g Calciumverbindung.

In einer bevorzugten Ausführungsform wird die Calciumverbindung als Feststoff eingesetzt. Dabei ist es wie oben beschrieben vorteilhaft, einen Feststoff mit einer hohen spezifischen Oberfläche zu verwenden. Eine hohe spezifische Oberfläche führt zu einer Verbesserung der Beschleunigerwirkung. Um dieselbe Beschleunigungswirkung zu erzielen kann verglichen mit einer Calciumverbindung mit geringer spezifischer Oberfläche anteilsmässig weniger einer Calciumverbindung mit hoher spezifischer Oberfläche eingesetzt werden. Bevorzugt für die vorliegende Erfindung ist es deshalb, die Calciumverbindung so zu dosieren, dass sich ein Verhältnis der Gesamtoberfläche der Calciumverbindung zur Menge von mineralischem Bindemittel von ungefähr 50 bis 70 m²/kg Bindemittel, bevorzugt ungefähr 55 bis 65 m²/kg Bindemittel, besonders bevorzugt ungefähr 57 bis 63 m²/kg Bindemittel, ergibt. Die Gesamtoberfläche der Calciumverbindung bezeichnet hierbei das mathematische Produkt der spezifischen Oberfläche (in m²/g; nach BET (N₂ Adsorption, gemessen nach DIN ISO 9277)) und der Einsatzmenge (in Gramm pro kg mineralisches Bindemittel).

Die Menge des Phosphorsäureesters zur Menge der Calciumverbindung wird in dieser Ausführungsform bevorzugt so angepasst, dass 0.001 bis 0.05, bevorzugt 0.005 bis 0.04, besonders bevorzugt 0.008 bis 0.02 g Phosphorsäureester pro m² Calciumverbindung eingesetzt werden.

Ein Gewichtsverhältnis der mindestens einen Calciumverbindung zum mindestens einen Phosphorsäureester eines mehrwertigen Alkohols liegt mit Vorteil im Bereich von 100:1 - 1:1, bevorzugt 50:1 - 5:1, insbesondere 30:1 - 10:1. Derartige Verhältnisse ergeben optimale Beschleunigungswirkungen bei gleichzeitig guter Verarbeitbarkeit der Bindemittelzusammensetzungen.

Gemäss einer weiteren vorteilhaften Ausführungsform wird der erfindungsgemässe Erhärtungsbeschleuniger in Kombination mit wenigstens einer weiteren erhärtungsbeschleunigenden Substanz eingesetzt oder er enthält diese. Grundsätzlich können hierbei eine Vielzahl von dem Fachmann bekannten Substanzen eingesetzt werden. Besonders vorteilhaft umfasst die weitere erhärtungsbeschleunigende Substanz jedoch ein oder mehrere der folgenden Vertreter:
a) ein oder mehrere weitere Aminoalkohole und/oder Salze davon
b) ein oder mehrere Alkali- und/oder Erdalkalinitrate
c) ein oder mehrere Alkali- und/oder Erdalkalinitrite
d) ein oder mehrere Alkali- und/oder Erdalkalithiocyanate
e) ein oder mehrere a-Hydroxycarbonsäuren
f) ein oder mehrere Alkali- und/oder Erdalkalihalogenide
g) Glyzerin und/oder Glyzerinderivate
h) ein oder mehrere Glykole und/oder Glykolderivate
i) ein oder mehrere Aluminiumsalze
j) ein oder mehrere Alkali- und/oder Erdalkalihydroxide

Wie sich gezeigt hat, sind die erfindungsgemässen Erhärtungsbeschleuniger mit diesen Vertretern von weiteren erhärtungsbeschleunigenden Substanzen im Allgemeinen gut kompatibel. Damit lässt sich beispielsweise eine flexible Anpassung an spezielle Verwendungen realisieren.

Es kann auch vorteilhaft sein, wenn der Erhärtungsbeschleuniger in Kombination mit wenigstens einem Zusatzmittel, beispielsweise einem Betonzusatzmittel und/oder einem Mörtelzusatzmittel, oder Prozesschemikalien verwendet wird. Das wenigstens eine Zusatzmittel umfasst insbesondere einen Entschäumer, einen Farbstoff, ein Konservierungsmittel, ein Fliessmittel, einen Verzögerer, einen Luftporenbildner, einen Schwindreduzierer und/oder einen Korrosionsinhibitor oder Kombinationen davon.

Mit Vorteil wird der Erhärtungsbeschleuniger zusammen mit einem Fliessmittel oder Verflüssiger eingesetzt oder er enthält ein solches. Als Fliessmittel kommen beispielsweise Lignosulfonate, sulfonierte Naphthalin-Formaldehyd-Kondensate, sulfonierte Melamin-Formaldehyd-Kondensate, sulfonierte Vinylcopolymere, Polycarboxylate, Polycarboxylatverflüssiger oder Mischungen davon, in Frage.

Das Fliessmittel beinhaltet im Speziellen ein Polycarboxylat, insbesondere einen Polycaboxylatether. Insbesondere ist das Fliessmittel ein Kammpolymer umfassend ein Polycarboxylatrückgrat mit daran gebundenen Polyetherseitenketten. Die Seitenketten sind dabei insbesondere über Ester-, Ether-, Imid- und/oder Amidgruppen an das Polycarboxylatrückgrat gebunden.

Vorteilhafte Fliessmittel sind z.B. Copolymere aus (Meth)acrylsäure- und/oder Maleinsäuremonomeren sowie Monomeren ausgewählt aus Polyalkylenglykolvinyl-ethern, Polyalkylenglykol-(meth)allyl-ethern, oder Polyalkylenglykolisoprenyl-ethern. Besonders geeignet sind z.B. Copolymere aus Maleinsäure oder deren Derivaten, Allylethern, insbesondere Allyl-Polyethylenglycole, und Vinylacetat. Entsprechende Copolymere sowie deren Herstellung sind beispielsweise in der EP 2 468 696 A1 (Sika Technology AG) beschrieben. Insbesondere geeignet sind z.B. sind die Copolymere P-1 bis P-4 wie sie in den Absätzen 0058 bis 0061 und Tabelle 1 der EP 2 468 696 A1 beschrieben sind.

Ebenfalls geeignet sind beispielsweise Copolymere aus Maleinsäure oder deren Derivaten, Allylethern, insbesondere Allyl-Polyethylenglycole, und (Meth)acrylsäure. Derartige Copolymere und deren Herstellung sind in der EP 2 522 680 A1 (Sika Technology AG) beschrieben. Vorteilhaft sind dabei z.B. sind die Copolymere P-1 bis P-4 wie sie in den Absätzen 0063 bis 0070 und Tabelle 1 der EP 2 522 680 A1 beschrieben sind.

Desweiteren sind geeignete Polycarboxylatether und Herstellungsverfahren beispielsweise offenbart in der EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in deren Beispielen. In einer Abart davon, wie sie in EP 1 348 729 A1 auf Seite 3 bis Seite 5 sowie in deren Beispielen beschrieben sind, kann das Kammpolymer in festem Aggregatszustand hergestellt werden.

Die Offenbarungen der im Zusammenhang mit den Fliessmitteln genannten Patentschriften wird hiermit insbesondere durch Bezugnahme eingeschlossen.

Entsprechende Kammpolymere werden auch von Sika Schweiz AG unter der Handelsnamenreihe ViscoCrete^{®} kommerziell vertrieben.

Insbesondere liegt ein Gewichtsverhältnis des mindestens einen Fliessmittels zum mindestens einen Phosphorsäureester eines mehrwertigen Alkohols im Bereich von 1:1 - 10:1, bevorzugt 1.5:1 - 5:1, insbesondere 2:1 - 3:1. Damit können gute Verflüssigungswirkungen bei zugleich effektiver Erhärtungsbeschleunigung erreicht werden. Das Fliessmittel beeinträchtigt dabei die Wirkung des Erhärtungsbeschleunigers kaum oder gar nicht.

Der Erhärtungsbeschleuniger kann grundsätzlich in unterschiedlichsten Formen vorliegen. Insbesondere können die einzelnen Komponenten des Erhärtungsbeschleunigers als individuelle Komponenten räumlich nebeneinander vorliegen, insbesondere als sogenanntes "Kit-of Parts". Es ist aber auch möglich, einzelne oder alle Komponenten des Beschleunigers in fester und/oder flüssiger Form vorzumischen.

Falls der Erhärtungsbeschleuniger eine Calciumverbindung enthält, insbesondere Calciumoxid und/oder Calciumhydroxid, liegt der Erhärtungsbeschleuniger mit Vorteil in Form eines wenigstens zweikomponentigen Erhärtungsbeschleunigers vor. Dabei liegt die Calciumverbindung in einer ersten Komponente vor, während der mindestens eine Phosphorsäureester eines mehrwertigen Alkohols und das mindestens eine Alkalimetallcarbonat zusammen in einer zweiten Komponente vorliegen oder getrennt voneinander als weitere individuelle Komponenten vorliegen. Dadurch kann z.B. die Lagerbeständigkeit verbessert werden.

Die Komponenten des wenigstens zweikomponentigen Beschleunigers liegen insbesondere räumlich getrennt vor, z.B. in wenigstens zwei individuellen Behältnissen oder in einem Behältnis mit mindestens zwei räumlich getrennten Bereichen.

Allfällige weitere Komponenten, wie z.B. ein Fliessmittel können in der ersten und/oder in einer zweiten Komponente und/oder in einer weiteren, räumlich getrennten Komponente vorliegen. Die weitere Komponente kann beispielsweise in einem weiteren individuellen Behältnis oder in einem weiteren räumlich getrennten Bereich eines Behältnisses mit mehreren räumlich getrennten Bereichen vorliegen.

Der Erhärtungsbeschleuniger oder eine oder mehrere der Beschleunigerkomponenten können in flüssiger und/oder in fester Form vorliegen. Falls der Erhärtungsbeschleuniger oder die Beschleunigerkomponenten in flüssiger Form vorliegen, handelt es sich insbesondere um wässrige Lösungen oder wässrige Dispersionen. Für den Fall, dass der Erhärtungsbeschleuniger oder eine oder mehrere der Beschleunigerkomponenten in fester Form vorliegen, werden diese z.B. als Pulver, Pellets, Schuppen und/oder auf einem festen Trägermaterial aufgebracht, eingesetzt.

Gemäss einer vorteilhaften Ausführungsform liegen der Phosphorsäureester eines mehrwertigen Alkohols und das Alkalimetallcarbonat in flüssiger Form, insbesondere als wässrige Lösung oder wässrige Dispersion, vor. Dies vereinfacht die Zugabe, Dosierung und Vermischung beim Anmachen der Bindemittelzusammensetzung. Ein Anteil des Phosphorsäureesters eines mehrwertigen Alkohols und ein Anteil des Alkalimetallcarbonats in den wässrigen Lösungen oder Dispersionen betragen dabei insbesondere jeweils 1 - 50 Gew.-%, bevorzugt 2 - 25 Gew.-% oder 5 - 15 Gew.-%, bezogen auf das Gesamtgewicht der wässrigen Lösung oder der Dispersion. Insbesondere liegen der Phosphorsäureester eines mehrwertigen Alkohols und das Alkalimetallcarbonat gemeinsam in einer wässrigen Lösung oder Dispersion vor. Falls vorhanden, liegt die Calciumverbindung dabei als separate Komponente und wie vorstehend beschrieben als Feststoff vor. Damit kann die Calciumverbindung insbesondere bereits vor der Zugabe von Anmachwasser zu einer mineralischen Bindemittelzusammensetzung hinzugefügt werden.

In einem weiteren Aspekt betrifft die vorliegende Erfindung eine Zusammensetzung enthaltend ein mineralisches Bindemittel und einen wie vorstehend beschriebenen Erhärtungsbeschleuniger. Das mineralische Bindemittel ist dabei wie vorstehend definiert. Die Zusammensetzung kann z.B. in trockener Form oder als eine mit Anmachwasser angemachte fluide oder angesteifte Bindemittelzusammensetzung vorliegen. Auch kann die Zusammensetzung als eine ausgehärtete Bindemittelzusammensetzung, z.B. als Formkörper, vorliegen.

Bevorzugt enthält die Zusammensetzung bezogen auf das Gewicht des Bindemittels dabei:
a) den Phosphorsäureester in einer Menge von 0.001 bis 2 Gew.-%, bevorzugt 0.005 bis 1 Gew.-%, besonders bevorzugt 0.01 bis 0.6 Gew.-% oder 0.1 bis 0.3 Gew.-%;
b) das Alkalimetallcarbonat in einer Menge von 0.001 bis 6 Gew.-%, bevorzugt 0.01 bis 2 Gew.-%, besonders bevorzugt 0.02 bis 0.1 Gew.-% oder 0.04 - 0.08 Gew.-%;
c) optional die Calciumverbindung mit einem Anteil von 0.001 bis 10 Gew.-%, bevorzugt 0.1 bis 5 Gew.-%, besonders bevorzugt 1 bis 4 Gew.-%.

Im Besonderen enthält die Zusammensetzung zudem ein wie vorstehend beschriebenes Fliessmittel. Falls vorhanden, weist das Fliessmittel bezogen auf das mineralische Bindemittel mit Vorteil einen Anteil von 0.01 - 6 Gew.-%, insbesondere 0.1 - 4 Gew.- %, weiter bevorzugt 0.5 - 3 Gew.-%, auf. Aufgrund der Kombination mit dem Fliessmittel kann die Verarbeitbarkeit der Bindemittelzusammensetzung verbessert werden und zugleich werden höhere Druckfestigkeiten erreicht. Letzteres insbesondere auch zu späten Zeiten, z.B. nach 28 Tagen.

Optional ist zudem ein wie vorstehend beschriebenes Zusatzmittel, insbesondere ein Betonzusatzmittel und/oder einem Mörtelzusatzmittel, und/oder eine weitere erhärtungsbeschleunigende Substanz in der Zusammensetzung vorhanden.

Abgesehen von speziellen Verwendungen ist es im Allgemeinen besonders vorteilhaft, wenn die erfindungsgemässen Erhärtungsbeschleuniger mit gewissen Substanzen nicht kombiniert werden. Insbesondere enthalten die erfindungsgemässen Erhärtungsbeschleuniger keine zusätzlichen Nitrate und/oder Nitrite. Dies insbesondere aufgrund der Toxizität und Korrosivität solcher Verbindungen. Ebenso weisen die erfindungsgemässen Erhärtungsbeschleuniger mit Vorteil keine zusätzlichen Thiocyanate auf. Thiocyanate sind gesundheitsgefährdend und im Hinblick auf die Korrosion ebenfalls problematisch. Zudem kann es insbesondere auch vorteilhaft sein, wenn die erfindungsgemässen Erhärtungsbeschleuniger keine zusätzlichen Halogenide, Alkalihydroxide, Aluminiumsalze, Glyzerin und/oder α-Hydroxycarbonsäuren aufweisen. Für spezielle Anwendung kann der Erhärtungsbeschleuniger aber dennoch mit derartigen Substanzen kombiniert werden.

In einem zusätzlichen Aspekt betrifft die Erfindung ein Verfahren zur Beschleunigung des Erhärtens einer mineralischen Bindemittelzusammensetzung, insbesondere nach 4 - 8 Stunden, und/oder zur Herstellung einer Zusammensetzung umfassend mindestens ein mineralisches Bindemittel, wobei ein Phosphorsäureester eines mehrwertigen Alkohols und ein Alkalimetallcarbonat gemeinsam und/oder getrennt voneinander zu einem mineralischen Bindemittel zugegeben werden.

Der Phosphorsäureester des mehrwertigen Alkohols und das Alkalimetallcarbonat sind dabei wie vorstehen definiert und liegen insbesondere in Form eines wie oben beschriebenen Erhärtungsbeschleunigers vor.

Der Phosphorsäureester wird dabei, bezogen auf den Gehalt an mineralischem Bindemittel, insbesondere in einer Menge von 0.001 bis 2 Gew.-%, bevorzugt 0.01 bis 1 Gew.-%, besonders bevorzugt 0.02 bis 0.6 Gew.-% verwendet. Das Alkalimetallcarbonat wird, bezogen auf den Gehalt an mineralischem Bindemittel, mit Vorteil in einer Menge von 0.001 bis 10 Gew.-%, bevorzugt 0.1 bis 5 Gew.-%, besonders bevorzugt 0.5 bis 3 Gew.-%, eingesetzt.

Optional wird eine wie oben beschriebene Calciumverbindung mit einem Anteil von 0.001 bis 10 Gew.-%, bevorzugt 0.1 bis 5 Gew.-%, besonders bevorzugt 0.5 bis 3 Gew.-%, bezogen auf den Gehalt an mineralischem Bindemittel, zugegeben.

Im Besonderen wird zudem ein wie vorstehend beschriebenes Fliessmittel beigemischt, insbesondere mit einem Anteil von 0.01 - 6 Gew.-%, insbesondere 0.1 - 4 Gew.- %, weiter bevorzugt 0.5 - 3 Gew.-%, bezogen auf den Gehalt an mineralischem Bindemittel.

Optional können zudem ein wie vorstehend beschriebenes Zusatzmittel, insbesondere ein Betonzusatzmittel und/oder einem Mörtelzusatzmittel, und/oder eine weitere erhärtungsbeschleunigende Substanz beigegeben werden.

Der Phosphorsäureester des mehrwertigen Alkohols und das Alkalimetallcarbonat oder der Erhärtungsbeschleuniger können prinzipiell zu jedem Zeitpunkt vor oder während dem Anmachen zum mineralischen Bindemittel gegeben werden.

Beispielsweise können der Phosphorsäureester des mehrwertigen Alkohols und das Alkalimetallcarbonat oder der Erhärtungsbeschleuniger wenigstens teilweise, insbesondere vollständig, dem Anmachwasser beigemischt und mit diesem dem mineralischen Bindemittel beim Anmachen zugegeben werden. Ebenfalls möglich ist es, den Phosphorsäureester des mehrwertigen Alkohols und das Alkalimetallcarbonat oder den Erhärtungsbeschleuniger wenigstens teilweise, insbesondere vollständig, vor dem Anmachen direkt mit dem mineralischen Bindemittel zu vermischen und erst anschliessend das Anmachwasser zuzugeben. Die Zugabe des Anmachwassers kann dabei auch zeitlich verzögert, beispielsweise Stunden, Tage oder sogar Monaten später, erfolgen.

Gemäss einer weiteren Variante können der Phosphorsäureester des mehrwertigen Alkohols und das Alkalimetallcarbonat oder der Erhärtungsbeschleuniger wenigstens teilweise, insbesondere vollständig, vor und/oder während einem Mahlprozess des mineralischen Bindemittels zum mineralischen Bindemittel zugegeben. Dadurch werden die Substanzen besonders gut mit dem mineralischen Bindemittel vermischt und ein zusätzlicher Mischvorgang entfällt. Überraschenderweise wurde gefunden, dass die Wirkung des Phosphorsäureesters des mehrwertigen Alkohols und des Alkalimetallcarbonats bzw. des Erhärtungsbeschleunigers durch den Mahlprozess nicht beeinträchtigt wird.

Wie vorstehend bereits dargelegt, ist es, abgesehen von speziellen Verwendungen, im Allgemeinen besonders vorteilhaft, wenn die erfindungsgemässen Erhärtungsbeschleuniger mit gewissen Substanzen nicht kombiniert werden. Insbesondere werden die erfindungsgemässen Erhärtungsbeschleuniger ohne zusätzliche Nitrate und/oder Nitrite verwendet.

Ebenso werden die erfindungsgemässen Erhärtungsbeschleuniger mit Vorteil ohne zusätzliche Thiocyanate verwendet. Zudem kann es insbesondere auch vorteilhaft sein, wenn die erfindungsgemässen Erhärtungsbeschleuniger ohne zusätzliche Halogenide, Alkalihydroxide, Aluminiumsalze, Glyzerin und/oder α-Hydroxycarbonsäuren zu verwenden.

Ein zusätzlicher Aspekt der vorliegenden Erfindung bezieht sich auf einen Formkörper, welcher erhältlich ist durch Aushärten einer wie vorstehend beschriebenen Zusammensetzung umfassend mindestens ein mineralisches Bindemittel nach Zugabe von Wasser. Der so hergestellte Formkörper kann dabei nahezu jede beliebige Form aufweisen und beispielsweise Bestandteil eines Bauwerks, wie z.B. eines Gebäudes, eines Mauerwerks oder einer Brücke, sein.

In einem weiteren Aspekt bezieht sich die vorliegende Erfindung auf die Verwendung eines Phosphorsäureester eines mehrwertigen Alkohols in Kombination mit einem Alkalimetallcarbonat, insbesondere in Form eines wie vorstehend beschriebenen Erhärtungsbeschleunigers, zur Beschleunigung des Erhärtens von mineralischen Bindemitteln und/oder Bindemittelzusammensetzungen, insbesondere Mörtel- und/oder Betonzusammensetzungen.

Weiter betrifft die Erfindung die Verwendung eines Alkalimetallcarbonats zur Verminderung des Einflusses von Magnesiumcarbonat auf beschleunigende Zusatzmittel, insbesondere Phosphorsäureester von mehrwertigen Alkoholen, in einer mineralischen Bindemittelzusammensetzung enthaltend Magnesiumcarbonat. Wie es sich gezeigt hat, können Alkalimetallcarbonate, insbesondere Natriumcarbonat (Na₂CO₃) und/oder Kaliumcarbonat (K₂CO₃) gezielt dazu eingesetzt werden, den unerwünschten Effekt von Magnesiumcarbonat, welcher darin besteht die Wirkung von beschleunigenden Zusatzmittel in mineralischen Bindemittelzusammensetzungen zumindest teilweise zu beeinträchtigen oder aufzuheben, zu reduzieren oder ganz zu neutralisieren.

Des Weiteren betrifft die Erfindung die Verwendung eines Alkalimetallcarbonats zur Verbesserung der Wirkung eines beschleunigenden Zusatzmittels, insbesondere eines Phosphorsäureesters von mehrwertigen Alkoholen, in einer mineralischen Bindemittelzusammensetzung enthaltend Magnesiumcarbonat.

Die verwendeten Phosphorsäureester von mehrwertigen Alkoholen und Alkalimetallcarbonate sind dabei wie vorstehend beschrieben definiert. Besonders bevorzugt werden dabei Glycerinphosphat, Dinatriumglycerinphosphat und/oder ein Hydrat als Phosphorsäureester von mehrwertigen Alkoholen verwendet. Als Alkalimetallcarbonate sind Natriumcarbonat (Na₂CO₃) und/oder Kaliumcarbonat (K₂CO₃) umfasst, im Besonderen Natriumcarbonat (Na₂CO₃), besonders geeignet.

Die nachfolgenden Ausführungsbeispiele verdeutlichen die Erfindung weiter.

### Ausführungsbeispiele

### 1. Substanzen und Methoden

### 1.1. Substanzen

Folgende Substanzen wurden für die Ausführungsbeispiele verwendet:

**Tabelle 1: Verwendete Substanzen**

| **Abkürzung** | **Substanz** |
|---|---|
| **PCE** | Polycarboxylatether-Fliessmittel (z.B. Sika^{®} Viscocrete^{®} 20 HE, erhältlich bei Sika Schweiz AG); Feststoffgehalt: 40 Gew.-% |
| **GPD** | Glycerin-Phosphat Dinatriumsalz Pentahydrat (erhältlich bei Sigma Aldrich Schweiz); 10 Gew.-% in H₂O |
| **NaCt** | Natriumcarbonat; 10 Gew.-% in H₂O |
| **KCt** | Kaliumcarbonat; 10 Gew.-% in H₂O |
| **MgCt** | Magnesiumcarbonat; 10 Gew.-% in H₂O |
| **CaOx** | Calciumoxid (Nekafin^{®} 2 von Kalkfabrik Netstal AG, Schweiz, mit einer spezifischen Oberfläche (BET) von 1.9 m²/g) |

Natriumcarbonat, Kaliumcarbonat und Magnesiumcarbonat sind kommerziell bei verschiedenen Anbietern in Reinform (Reinheit > 97%) erhältlich. Diese wurden jeweils in der in Tabelle 1 angegebenen Menge in Wasser gelöst und als wässrige Lösungen eingesetzt.

### 1.2 Mörtelmischungen

Die eingesetzten Mörtelmischung **M1** weist die in Tabelle 2 beschriebenen Trockenzusammensetzungen auf.

**Tabelle 2: Trockenzusammensetzung Mörtelmischung**

| **Komponente** | **M1** |
|---|---|
| Portlandzement vom Typ CEM I 52.5 N (Normo 5R; erhältlich bei Holcim Schweiz) | 750 g |
| Kalksteinfüller | 141 g |
| Sand 0-1 mm | 738 g |
| Sand 1-4 mm | 1107 g |
| Sand 4-8 mm | 1154 g |

Zum Anmachen der Mörtelmischungen wurden die Sande, der Kalksteinfüller, der Zement und gegebenenfalls Calciumoxid **(CaOx)** bei einer Temperatur von 20°C während 1 Minute in einem Hobart-Mischer trocken gemischt. Innerhalb von 30 Sekunden wurde das Anmachwasser (Wasser/Zement-Wert bzw. w/z = 0.4), dem vorgängig das Polycarboxylatether-Fliessmittel **(PCE;** 1 Gew.-% bezogen auf Zement) und gegebenenfalls weitere Substanzen **(GPD, NaCt, KCt, MgCt)** beigemischt wurde, zugegeben und noch weitere 2.5 Minuten gemischt. Die Gesamtmischzeit nass dauerte jeweils 3 Minuten.

### 1.3 Testverfahren

Zur Bestimmung der Wirksamkeit der erfindungsgemässen Erhärtsungsbeschleuniger wurden die Druckfestigkeiten von unterschiedlichen Mörtelmischungen zu verschiedenen Zeiten nach dem Anmachen der Mörtelmischungen bestimmt. Die Prüfung zur Bestimmung der Druckfestigkeit (in N/mm²) erfolgte an Prismen (40 × 40 × 160mm) gemäss den Normen EN 12390-1 bis 12390-4.

Unmittelbar nach dem Anmachen der Mörtelmischungen wurde auch das jeweilige Ausbreitmass (ABM) gemessen. Das Ausbreitmass (ABM) der Mörtelmischungen wurde gemäss EN 1015-3 gemessen.

### 2. Mörteltest

Tabelle 3 zeigt den negativen Einfluss von Magnesiumcarbonat auf die Wirkung von Erhärtungsbeschleunigern. Je mehr Magnesiumcarbonat vorhanden ist, desto geringer sind die Druckfestigkeiten nach 6 und 8 Stunden bzw. desto geringer ist die beschleunigende Wirkung von **GPD** und **CaOx.**

**Tabelle 3: Einfluss Magnesiumcarbonat**

| **Nr.** | **CaOx^{*}** | **GPD^{*}** | **MgCt^{*}** | **ABM⁺** [mm] | **Druckfestigkeit** [MPa] | |
|---|---|---|---|---|---|---|
| | | | | | 6h | 8h |
| **A1** | 3.00 | 1.50 | - | 192 | 4.0 | 10.3 |
| **A2** | 3.00 | 1.50 | 0.27 | 187 | 1.8 | 5.7 |
| **A3** | 3.00 | 1.50 | 0.53 | 180 | 1.3 | 4.1 |
| **A4** | 3.00 | 1.50 | 0.80 | 175 | 1.3 | 4.1 |
| **A5** | 3.00 | 1.50 | 1.07 | 142 | 1.1 | 2.3 |

| | | | | | | |
|---|---|---|---|---|---|---|
| *Gew.-% bezogen auf Zementgehalt ⁺Ausbreitmass unmittelbar nach dem Anmachen | | | | | | |

Bei den in Tabelle 4 gezeigten Versuchen **B1** - **B6** wurde der Einfluss von Natriumcarbonat in Bindemittelzusammensetzungen enthaltend Magnesiumcarbonat untersucht.

**Tabelle 4: Wirkung Natriumcarbonat**

| **Nr.** | **CaOx^{*}** | **GPD^{*}** | **MgCt^{*}** | **NaCt^{*}** | **ABM⁺** [mm] | **Druckfestigkeit** [MPa] | |
|---|---|---|---|---|---|---|---|
| | | | | | | 6h | 8h |
| **B1** | 3.00 | 1.50 | - | - | 196 | 9.9 | 19.8 |
| **B2** | 3.00 | 1.50 | 0.26 | - | 225 | 4.8 | 11.7 |
| **B3** | 3.00 | 1.50 | 0.26 | 0.60 | 196 | 8.2 | 19.2 |
| **B4** | 3.00 | 1.50 | 0.26 | 0.70 | 168 | 9.9 | 20.3 |
| **B5** | 3.00 | 1.50 | 0.26 | 0.80 | 151 | 8.9 | 19.0 |
| **B6** | 3.00 | 1.50 | 0.26 | 0.90 | 122 | 8.8 | 20.6 |

| | | | | | | | |
|---|---|---|---|---|---|---|---|
| *Gew.-% bezogen auf Zementgehalt ⁺Ausbreitmass unmittelbar nach dem Anmachen | | | | | | | |

Aus Tabelle 4 ist ersichtlich, dass die Verwendung von Natriumcarbonat **(NaCt),** die negativen Einflüsse von Magnesiumcarbonat **(MgCt)** aufzuheben bzw. zu neutralisieren vermag. Besonders vorteilhaft sind dabei Konzentrationen von 0.06 und 0.07 Gew.-% Natriumcarbonat (bzw. 0.6 und 0.7 Gew.-% der 10%-igen Lösungen **NaCt)** (siehe Versuche **B3** und **B4).** Dabei werden einerseits hohe Druckfestigkeiten und zugleich gute Verarbeitbarkeiten (hoher Wert im Ausbreitmass) erreicht.

Bei den in Tabelle 5 präsentierten Versuchen **C1 - C6** wurde der Einfluss von Natriumcarbonat in Bindemittelzusammensetzungen enthaltend Magnesiumcarbonat untersucht.

**Tabelle 5: Wirkung Kaliumcarbonat**

| **Nr.** | **CaOx^{*}** | **GPD^{*}** | **MgCt^{*}** | **KCt^{*}** | **ABM⁺** [mm] | **Druckfestigkeit** [MPa] | | |
|---|---|---|---|---|---|---|---|---|
| | | | | | | 4h | 6h | 8h |
| **C1** | 3.00 | - | - | - | 234 | 0.7 | 2.5 | 6.1 |
| **C2** | 3.00 | 1.50 | - | - | 211 | 2.8 | 10.2 | 20.4 |
| **C3** | 3.00 | 1.50 | 0.26 | - | 218 | 1.1 | 3.0 | 8.5 |
| **C4** | 3.00 | 1.50 | 0.26 | 0.30 | 185 | 1.7 | 7.7 | 18.0 |
| **C5** | 3.00 | 1.50 | 0.26 | 0.60 | 187 | 1.9 | 7.6 | 18.3 |
| **C6** | 3.00 | 1.50 | 0.26 | 1.20 | 144 | 2.4 | 10.4 | 21.8 |

| | | | | | | | | |
|---|---|---|---|---|---|---|---|---|
| *Gew.-% bezogen auf Zementgehalt ⁺Ausbreitmass unmittelbar nach dem Anmachen | | | | | | | | |

Tabelle 5 zeigt, dass auch Kaliumcarbonat die negativen Einflüsse von Magnesiumcarbonat **(MgCt)** weitestgehend aufzuheben bzw. zu neutralisieren vermag. Besonders vorteilhaft sind dabei Konzentrationen von 0.06 Gew.-% Kaliumcarbonat (bzw. 0.6 Gew.-% der 10%-igen Lösungen **KCt)** (siehe Versuch **C5).** Höhere Konzentrationen als bei Versuch **C6** ergeben zwar noch bessere Druckfestigkeiten, resultieren aber in einer weniger guten Verarbeitbarkeit (Ausbreitmass bei 144 mm). Ein Vergleich der Versuche **C1** und **C2** belegt des Weiteren die beschleunigende Wirkung von **GPD.**

Die in Tabelle 6 präsentierten Versuchen **D1** - **D4** wurden allesamt ohne Magnesiumcarbonat durchgeführt und verdeutlichen das Zusammenwirken von Alkalimetallcarbonaten und Phosphorsäureestern von mehrwertigen Alkoholen.

**Tabelle 6: Zusammenwirken Natriumcarbonat GPD**

| **Nr.** | **CaOx^{*}** | **GPD^{*}** | **MgCt^{*}** | **NaCt^{*}** | **ABM⁺** [mm] | **Druckfestigkeit** [MPa] | |
|---|---|---|---|---|---|---|---|
| | | | | | | 6h | 8h |
| **D1** | 3.00 | - | - | - | 234 | 0.5 | 0.6 |
| **D2** | 3.00 | 1.50 | - | - | 165 | 0.9 | 1.5 |
| **D3** | 3.00 | - | - | 0.60 | 232 | 0.5 | 0.6 |
| **D4** | 3.00 | 1.50 | - | 0.60 | 190 | 1.6 | 4.5 |

| | | | | | | | |
|---|---|---|---|---|---|---|---|
| *Gew.-% bezogen auf Zementgehalt ⁺Ausbreitmass unmittelbar nach dem Anmachen | | | | | | | |

Tabelle 6 zeigt unter anderem, dass Natriumcarbonat als solches keine beschleunigende Wirkung hat (vgl. Versuch **D3** vs. Versuch **D1).** Aus einem Vergleich der Versuche **D2** und **D3** ergibt sich aber, dass durch das Zusammenwirken von Natriumcarbonat und **GPD** die beschleunigende Wirkung von **GPD** nochmals stark erhöht wird. Dies zeigt, dass Alkalimetallcarbonate und Phosphorsäureester von mehrwertigen Alkoholen synergistisch zusammenwirken.

Die vorstehend beschriebenen Ausführungsformen sind jedoch lediglich als illustrative Beispiele zu verstehen, welche im Rahmen der Erfindung beliebig abgewandelt werden können.

So in den Beispielen kann z.B. Calciumoxid **(CaOx)** als zusätzlich Komponente weggelassen werden. Dabei resultieren geringere Druckfestigkeiten. In qualitativer Hinsicht ändert sich jedoch nichts an den beschriebenen Wirkungen und Effekte.

Ebenfalls möglich ist es z.B., den Zement wenigstens teilweise durch eine latent-hydraulische und/oder puzzolanische Bindemittel zu ersetzen. Auch können zusätzlich oder anstelle der beschriebenen Aggregate (Sande, Kalksteinfüller) grössere Aggregate verwendet werden, um z.B. eine Betonzusammensetzung zu erhalten. Die vorstehend beschriebenen Wirkungen und Effekte ändern sich dadurch nicht.

## Patentansprüche

1. Erhärtungsbeschleuniger für mineralische Bindemittel, insbesondere für zementöse Bindemittelzusammensetzungen, umfassend mindestens einen Phosphorsäureester eines mehrwertigen Alkohols und mindestens ein Alkalimetallcarbonat.

2. Erhärtungsbeschleuniger nach Anspruch 1, **dadurch gekennzeichnet, dass** der Phosphorsäureester ein partieller Ester eines mehrwertigen Alkohols, vorzugsweise ein Monoester eines zwei- oder dreiwertigen Alkohols, besonders bevorzugt von Glycerin, ist.

3. Erhärtungsbeschleuniger nach wenigstens einem der vorangehende Ansprüche, **dadurch gekennzeichnet, dass** das mindestens eine Alkalimetallcarbonat Natriumcarbonat (Na₂CO₃) und/oder Kaliumcarbonat (K₂CO₃) umfasst, bevorzugt Natriumcarbonat (Na₂CO₃).

4. Erhärtungsbeschleuniger nach wenigstens einem der vorhergehenden Ansprüche, **dadurch gekennzeichnet, dass** der mindestens eine Phosphorsäureester Glycerinphosphat, Dinatriumglycerinphosphat und/oder ein Hydrat davon umfasst und dass das mindestens eine Alkalimetall Natriumcarbonat (Na₂CO₃) und/oder Kaliumcarbonat (K₂CO₃) umfasst, bevorzugt Natriumcarbonat (Na₂CO₃).

5. Erhärtungsbeschleuniger nach wenigstens einem der vorangehende Ansprüche, **dadurch gekennzeichnet, dass** ein Gewichtsverhältnis des mindestens einen Phosphorsäureester eines mehrwertigen Alkohols zum mindestens eines Alkalimetallcarbonat im Bereich von 1:1 - 10:1, bevorzugt 1.5:1 - 5:1, insbesondere 2:1 - 3:1, liegt.

6. Erhärtungsbeschleuniger nach wenigstens einem der vorhergehenden Ansprüche, **dadurch gekennzeichnet, dass** der Beschleuniger zusätzlich mindestens eine Calciumverbindung beinhaltet.

7. Erhärtungsbeschleuniger nach Anspruch 6, **dadurch gekennzeichnet, dass** die Calciumverbindung Calciumoxid und/oder Calciumhydroxid beinhaltet.

8. Erhärtungsbeschleuniger nach wenigstens einem der Ansprüche 6 - 7, **dadurch gekennzeichnet, dass** ein Gewichtsverhältnis der mindestens einen Calciumverbindung zum mindestens einen Phosphorsäureester eines mehrwertigen Alkohols im Bereich von 100:1 - 1:1, bevorzugt 50:1 - 5:1, insbesondere 30:1 - 10:1, liegt.

9. Erhärtungsbeschleuniger nach wenigstens einem der Ansprüche 6 - 8, **dadurch gekennzeichnet, dass** der Erhärtungsbeschleuniger in Form eines wenigstens zweikomponentigen Erhärtungsbeschleunigers vorliegt, wobei die Calciumverbindung in einer ersten Komponente enthalten ist, während der mindestens eine Phosphorsäureester eines mehrwertigen Alkohols und das mindestens eine Alkalimetallcarbonat zusammen in einer zweiten Komponente vorliegen oder getrennt voneinander als weitere individuelle Komponenten vorliegen.

10. Zusammensetzung umfassend mindestens ein mineralisches Bindemittel und mindestens einen Beschleuniger nach wenigstens einem der Ansprüche 1 - 9.

11. Zusammensetzung nach Anspruch 10, enthaltend, jeweils bezogen auf das Gewicht des Bindemittels:
a) den Phosphorsäureester eines mehrwertigen Alkohols in einer Menge von 0.001 bis 2 Gew.-%, bevorzugt 0.005 bis 1 Gew.-%, besonders bevorzugt 0.01 bis 0.6 Gew.-%;
b) das Alkalimetallcarbonat in einer Menge von 0.001 bis 6 Gew.-%, bevorzugt 0.01 bis 1 Gew.-%, besonders bevorzugt 0.02 bis 0.1 Gew.-%;
c) optional die Calciumverbindung mit einem Anteil von 0.001 bis 10 Gew.-%, bevorzugt 0.1 bis 5 Gew.-%, besonders bevorzugt 1 bis 4 Gew.-%.

12. Formkörper erhältlich durch Aushärten einer Zusammensetzung nach wenigstens einem der Ansprüche 10 - 11 nach Zugabe von Wasser.

13. Verfahren zur Beschleunigung des Erhärtens eines mineralischen Bindemittels und/oder zur Herstellung einer Zusammensetzung umfassend mindestens ein mineralisches Bindemittel, **dadurch gekennzeichnet, dass** ein Phosphorsäureester eines mehrwertigen Alkohols und ein Alkalimetallcarbonat, insbesondere in Form eines Erhärtungsbeschleunigers nach wenigstens einem der Ansprüche 1 - 9, gemeinsam und/oder getrennt voneinander zu einem mineralischen Bindemittel zugegeben werden.

14. Verwendung eines Phosphorsäureester eines mehrwertigen Alkohols in Kombination mit einem Alkalimetallcarbonat, insbesondere in Form eines Beschleunigers nach wenigstens einem der Ansprüche 1 - 9, zur Beschleunigung des Erhärtens eines mineralischen Bindemittels oder einer mineralischen Bindemittelzusammensetzung, insbesondere einer Mörtel- oder Betonzusammensetzungen.

15. Verwendung eines Alkalimetallcarbonats zur Verminderung des Einflusses von Magnesiumcarbonat auf beschleunigende Zusatzmittel, insbesondere eines Phosphorsäureesters von mehrwertigen Alkoholen, in einer mineralischen Bindemittelzusammensetzung enthaltend Magnesiumcarbonat und/oder zur Verbesserung der Wirkung eines beschleunigenden Zusatzmittels, insbesondere eines Phosphorsäureesters von mehrwertigen Alkoholen, in einer mineralischen Bindemittelzusammensetzung enthaltend Magnesiumcarbonat.

## Claims

1. A hardening accelerator for mineral binders, more particularly for cementitious binder compositions, comprising at least one phosphoric acid ester of a polyhydric alcohol and at least one alkali metal carbonate.

2. The hardening accelerator as claimed in claim 1, **characterized in that** the phosphoric acid ester is a partial ester of a polyhydric alcohol, preferably a monoester of a di- or trihydric alcohol, more preferably of glycerol.

3. The hardening accelerator as claimed in at least one of the preceding claims, **characterized in that** the at least one alkali metal carbonate comprises sodium carbonate (Na₂CO₃) and/or potassium carbonate (K₂CO₃), preferably sodium carbonate (Na₂CO₃).

4. The hardening accelerator as claimed in at least one of the preceding claims, **characterized in that** the at least one phosphoric acid ester comprises glycerol phosphate, disodium glycerol phosphate and/or a hydrate thereof and **in that** the at least one alkali metal comprises sodium carbonate (Na₂CO₃) and/or potassium carbonate (K₂CO₃), preferably sodium carbonate (Na₂CO₃).

5. The hardening accelerator as claimed in at least one of the preceding claims, **characterized in that** a weight ratio of the at least one phosphoric acid ester of a polyhydric alcohol to the at least one alkali metal carbonate is in the range of 1:1 - 10:1, preferably 1.5:1 - 5:1, more particularly 2:1 - 3:1.

6. The hardening accelerator as claimed in at least one of the preceding claims, **characterized in that** the accelerator additionally comprises at least one calcium compound.

7. The hardening accelerator as claimed in claim 6, **characterized in that** the calcium compound comprises calcium oxide and/or calcium hydroxide.

8. The hardening accelerator as claimed in at least one of claims 6 - 7, **characterized in that** a weight ratio of the at least one calcium compound to the at least one phosphoric acid ester of a polyhydric alcohol is in the range of 100:1 - 1:1, preferably 50:1 - 5:1, more particularly 30:1 - 10:1.

9. The hardening accelerator as claimed in at least one of claims 6 - 8, **characterized in that** the hardening accelerator is in the form of an at least two-component hardening accelerator, with the calcium compound being present in a first component, while the at least one phosphoric acid ester of a polyhydric alcohol and the at least one alkali metal carbonate are present together in a second component or are present separately from one another as further individual components.

10. A composition comprising at least one mineral binder and at least one accelerator as claimed in at least one of claims 1 - 9.

11. The composition as claimed in claim 10, comprising, based in each case on the weight of the binder:
a) the phosphoric acid ester of a polyhydric alcohol in an amount of 0.001 to 2 wt%, preferably 0.005 to 1 wt%, more preferably 0.01 to 0.6 wt%;
b) the alkali metal carbonate in an amount of 0.001 to 6 wt%, preferably 0.01 to 1 wt%, more preferably 0.02 to 0.1 wt%;
c) optionally the calcium compound with a fraction of 0.001 to 10 wt%, preferably 0.1 to 5 wt%, more preferably 1 to 4 wt%.

12. A shaped body obtainable by curing a composition as claimed in at least one of claims 10 - 11 after addition of water.

13. A method for accelerating the hardening of a mineral binder and/or for producing a composition comprising at least one mineral binder, **characterized in that** a phosphoric acid ester of a polyhydric alcohol and an alkali metal carbonate, more particularly in the form of a hardening accelerator as claimed in at least one of claims 1 - 9, are added together and/or separately from one another to a mineral binder.

14. The use of a phosphoric acid ester of a polyhydric alcohol in combination with an alkali metal carbonate, more particularly in the form of an accelerator as claimed in at least one of claims 1 - 9, for accelerating the hardening of a mineral binder or of a mineral binder composition, more particularly of a mortar or concrete compositions.

15. The use of an alkali metal carbonate for reducing the influence of magnesium carbonate on accelerating admixtures, more particularly of a phosphoric acid ester of polyhydric alcohols, in a mineral binder composition comprising magnesium carbonate, and/or for improving the effect of an accelerating admixture, more particularly of a phosphoric acid ester of polyhydric alcohols, in a mineral binder composition comprising magnesium carbonate.

## Revendications

1. Accélérateur de durcissement pour liants minéraux, en particulier des compositions cimentaires de liant, comprenant au moins un ester d'acide phosphorique d'un alcool polyvalent et au moins un carbonate de métal alcalin.

2. Accélérateur de durcissement selon la revendication 1, **caractérisé en ce que** l'ester d'acide phosphorique est un ester partiel d'un alcool polyvalent, de préférence un monoester d'un alcool divalent ou trivalent, de manière particulièrement préférée de glycérol.

3. Accélérateur de durcissement selon au moins l'une quelconque des revendications précédentes, **caractérisé en ce que** ledit au moins un carbonate de métal alcalin comprend du carbonate de sodium (Na₂CO₃) et/ou du carbonate de potassium (K₂CO₃), de préférence du carbonate de sodium (Na₂CO₃).

4. Accélérateur de durcissement selon au moins l'une quelconque des revendications précédentes, **caractérisé en ce que** ledit au moins un ester d'acide phosphorique comprend du phosphate de glycérol, du phosphate de glycérol disodique et/ou un hydrate de celui-ci et **en ce que** ledit au moins un métal alcalin comprend du carbonate de sodium (Na₂CO₃) et/ou du carbonate de potassium (K₂CO₃), de préférence du carbonate de sodium (Na₂CO₃).

5. Accélérateur de durcissement selon au moins l'une quelconque des revendications précédentes, **caractérisé en ce qu'**un rapport pondéral dudit au moins un ester d'acide phosphorique d'un alcool polyvalent au dit au moins un carbonate de métal alcalin se situe dans la plage de 1:1-10:1, de préférence de 1,5:1-5:1, en particulier de 2:1-3:1.

6. Accélérateur de durcissement selon au moins l'une quelconque des revendications précédentes, **caractérisé en ce que** l'accélérateur comprend en outre au moins un composé à base de calcium.

7. Accélérateur de durcissement selon la revendication 6, **caractérisé en ce que** le composé à base de calcium comprend de l'oxyde de calcium et/ou de l'hydroxyde de calcium.

8. Accélérateur de durcissement selon au moins l'une quelconque des revendications 6-7, **caractérisé en ce qu'**un rapport pondéral dudit au moins un composé à base de calcium au dit au moins un ester d'acide phosphorique d'un alcool polyvalent se situe dans la plage de 100:1-1:1, de préférence de 50:1-5:1, en particulier de 30:1-10:1.

9. Accélérateur de durcissement selon au moins l'une quelconque des revendications 6-8, **caractérisé en ce que** l'accélérateur de durcissement se trouve sous forme d'au moins un accélérateur de durcissement à deux composants, le composé à base de calcium étant contenu dans un premier composant alors que ledit au moins un ester d'acide phosphorique d'un alcool polyvalent et ledit au moins un carbonate de métal alcalin se trouvent ensemble dans un deuxième composant ou séparément l'un de l'autre sous forme d'autres composants éventuels.

10. Composition comprenant au moins un liant minéral et au moins un accélérateur selon au moins l'une quelconque des revendications 1-9.

11. Composition selon la revendication 10, contenant, à chaque fois par rapport au poids du liant :
a) l'ester d'acide phosphorique d'un alcool polyvalent en une quantité de 0,001 à 2% en poids, de préférence de 0,005 à 1% en poids, de manière particulièrement préférée de 0,01 à 0,6% en poids ;
b) le carbonate de métal alcalin en une quantité de 0,001 à 6% en poids, de préférence de 0,01 à 1% en poids, de manière particulièrement préférée de 0,02 à 0,1% en poids ;
c) éventuellement le composé à base de calcium en une proportion de 0,001 à 10% en poids, de préférence de 0,1 à 5% en poids, de manière particulièrement préférée de 1 à 4% en poids.

12. Corps façonné, pouvant être obtenu par durcissement d'une composition selon au moins l'une quelconque des revendications 10-11 après addition d'eau.

13. Procédé pour l'accélération du durcissement d'un liant minéral et/ou pour la préparation d'une composition comprenant au moins un liant minéral, **caractérisé en ce qu'**un ester d'acide phosphorique d'un alcool polyvalent et un carbonate de métal alcalin, en particulier sous forme d'un accélérateur de durcissement selon au moins l'une quelconque des revendications 1-9, sont ajoutés ensemble et/ou séparément l'un de l'autre à un liant minéral.

14. Utilisation d'un ester d'acide phosphorique d'un alcool polyvalent en combinaison avec un carbonate de métal alcalin, en particulier sous forme d'un accélérateur selon au moins l'une quelconque des revendications 1-9 pour l'accélération du durcissement d'un liant minéral ou d'une composition de liant minéral, en particulier d'une composition de mortier ou de béton.

15. Utilisation d'un carbonate de métal alcalin pour la diminution de l'influence du carbonate de magnésium sur des additifs accélérateurs, en particulier d'un ester d'acide phosphorique d'alcools polyvalents, dans une composition de liant minéral contenant du carbonate de magnésium et/ou pour l'amélioration de l'action d'un additif accélérateur, en particulier d'un ester d'acide phosphorique d'alcools polyvalents, dans une composition de liant minéral contenant du carbonate de magnésium.
